# EUROPÄISCHE PATENTSCHRIFT

(11) **EP 1 395 468 B1**
(45) Veröffentlichungstag und Bekanntmachung des Hinweises auf die Patenterteilung: **24.01.2007**
(21) Anmeldenummer: 02769411.6
(22) Anmeldetag: 28.02.2002
(51) Int. Cl.: B60S 1/32, B60S 1/34

(54) **WISCHERARM, INSBESONDERE FÜR EINE SCHEIBENWISCHVORRICHTUNG EINES KRAFTFAHRZEUGS**
WIPER ARM, ESPECIALLY FOR A WINDSCREEN-WIPING DEVICE OF A MOTOR VEHICLE
BRAS D'ESSUIE-GLACE, NOTAMMENT POUR SYSTEME D'ESSUIE-GLACE D'AUTOMOBILE

(30) Priorität: 29.05.2001 DE 10126258
(43) Veröffentlichungstag der Anmeldung: 10.03.2004
(73) Patentinhaber: ROBERT BOSCH GMBH, 70442 Stuttgart (DE)
(72) Erfinder: RITT, Jean-Marc, F-67000 Strasbourg (FR)
(86) Internationale Anmeldenummer: PCT/DE2002/000751
(87) Internationale Veröffentlichungsnummer: WO 2002/096729

(56) Entgegenhaltungen:
- EP-A- 0 845 394
- DE-A- 19 747 857
- DE-A- 19 805 316
- US-A- 4 170 804
- US-A- 4 856 137

## Beschreibung

### Stand der Technik

Die Erfindung betrifft einen Wischerarm, insbesondere für eine Heckwischanlage eines Kraftfahrzeugs nach Gattung der unabhängigen Ansprüche.

Es sind schon zahlreiche Wischerarme für Scheibenwischvorrichtungen von Kraftfahrzeugen bekannt. Diese Wischerarme weisen ein Kunststoffgelenkteil auf, welches an einem Ende ein Wischblatt trägt. Das andere Ende ist mit einem Befestigungsteil drehbeweglich verbunden, welches die Pendelbewegung der Wischerwelle auf das Gelenkteil und damit das Wischblatt überträgt. Das Befestigungsteil ist dabei als Zink-, Alu-, oder Kunststoffgußteil ausgebildet.

Insbesondere ist aus der US-A-4,170,804 ein Wischerarm mit den Merkmalen des Oberbegriffs des Anspruchs 1 bekannt.

### Vorteile der Erfindung

Der erfindungsgemäße Wischerarm mit den Merkmalen des Hauptanspruchs hat den Vorteil, dass durch die Kombination eines aus Kunststoff ausgebildeten Gelenkteils mit einem aus Blech ausgebildeten Befestigungsteil eine höhere Drehmomentfestigkeit erreicht wird, und das Gelenk zwischen Befestigungsteil und Gelenkteil einfach zu realisieren ist.

Im Gegensatz zu Gußteilen kriecht Blech kaum und ist darüber hinaus kostengünstiger als Zink oder Aluminiumgußteile.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn das Gelenkteil im Bereich des zweiten Endes, an dem es mit dem Befestigungsteil verbunden ist, von im Wesentlichen umgekehrt U-förmiger Gestalt ist und das Befestigungsteil das Gelenkteil in diesem Bereich zumindest teilweise umgreift. Dadurch, dass das Befestigungsteil das Gelenkteil umgreift, können Drehelemente anstatt im Inneren des U-förmigen Gelenkteils an dessen Außenseite angeordnet werden. Das Gelenkteil ist dadurch einfacher zu fertigen, weil damit beispielsweise die Anzahl der Schieber im Spritzgußverfahren reduziert werden kann.

Besonders vorteilhaft ist es, wenn das Gelenkteil im Bereich des zweiten Endes verjüngt ist und im verjüngten Bereich mindestens ein Scharnierbolzen angeordnet ist. Auf diese Weise kann der Materialverbrauch für das Befestigungsteil, welches das Gelenkteil in diesem Bereich umgreifen soll, geringgehalten werden. Außerdem kann so eine ebene Oberfläche zwischen Gelenkteil und Befestigungsteil erzielt werden.

Besonders Vorteilhaft ist darüber hinaus, wenn der verjüngte Bereich ein Befestigungselement zur Befestigung einer Schutzkappe aufweist. Wird die Schutzkappe am Scharnierbolzen befestigt, so kann die Schutzkappe ebenfalls drehbeweglich ausgeführt werden. Dadurch kann die Schutzkappe das Befestigungsteil vor Umwelteinflüssen schützen, wodurch Korrosion des Befestigungsteils vermieden werden kann.

Weiterhin ist vorteilhaft, wenn der Scharnierbolzen in Richtung des ersten Endes durch Abstützelemente abgestützt ist. Dadurch wird die Haltbarkeit des Scharnierbolzens und damit des Befestigungsteils erhöht, da ein Abbrechen der Scharnierbolzen verhindert wird.

Besonders vorteilhaft ist es dabei, wenn die Abstützelemente als Anschläge zur Drehwinkelbegrenzung dienen, da durch diese Doppelfunktion keine weiteren Anschläge zur Drehwinkelbegrenzung benötigt werden.

Als weiterer Vorteil ist anzusehen, wenn der Scharnierbolzen das Gelenkteil nicht durchgreift, sondern nur an der Außenseite der Lateralflanken des U-förmigen Gelenkteils angeformt sind. Auf diese Weise steht im inneren des Gelenkteils ausreichend Raum zur Unterbringung eines Federelements zur Verfügung, so dass auf einen Winkelbügel oder ähnliches verzichtet werden kann.

Weiterhin vorteilhaft ist es, wenn das Gelenkteil und das Befestigungsteil über mindestens ein im Wesentlichen gerades Federelement verspannt sind. Dadurch kann die drehbewegliche Verbindung zwischen Gelenkteil und Befestigungsteil sehr einfach gestaltet werden.

### Zeichnungen

Ein Ausführungsbeispiel der Erfindung ist in den Zeichnungen dargestellt und in der nachfolgenden Beschreibung näher erläutert. Es zeigen:
Fig. 1 einen erfindungsgemäßen Wischerarm in einer Seitenansicht,
Fig. 2 das zweite Ende eines Gelenkteils und ein Befestigungsteil in perspektivischer Seitendarstellung,
Fig. 3 Gelenkteil und Befestigungsteil wie in Fig. 2 in einer perspektivischen Darstellung von unten,
Fig. 4 das zweite Ende eines erfindungsgemäßen Gelenkteils in einer Seitenansicht in abgeklappter Stellung,
Fig. 5 ein zweites Ende eines erfindungsgemäßen Gelenkteils mit einer Schutzkappe,
Fig. 6 das zweite Ende eines erfindungsgemäßen Gelenkteils mit Schutzkappe in aufgeklappter Position,
Fig. 7 ein zweites Ende eines erfindungsgemäßen Gelenkteils mit einer Schutzkappe vor der Montage,
Fig. 8 ein zweites Ende eines erfindungsgemäßen Gelenkteils in perspektivischer Darstellung im Detail und
Fig. 9 eine Variation eines Befestigungsteils eines erfindungsgemäßen Wischerarms.

### Beschreibung des Ausführungsbeispiels

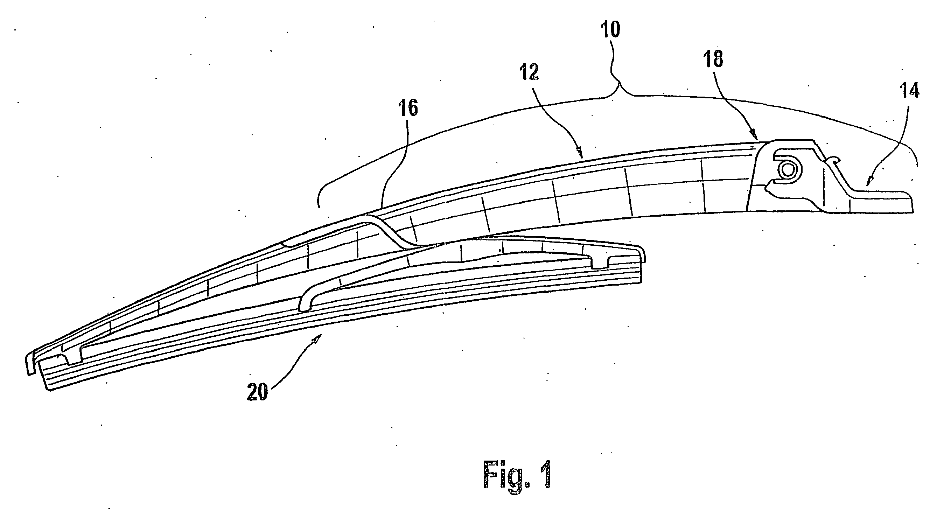

In Fig. 1 ist ein erfindungsgemäßer Wischerarm 10 in einer Seitenansicht gezeigt. Dieser besteht im Wesentlichen aus einem Gelenkteil 12 und einem Befestigungsteil 14. Das Gelenkteil 12 weist zwei Enden 16, 18 auf, wobei das erste Ende 16 mit einem Wischblatt 20 verbunden ist. Das zweite Ende 18 des Gelenkteils 12 ist mit dem Befestigungsteil 14 drehbeweglich verbunden.

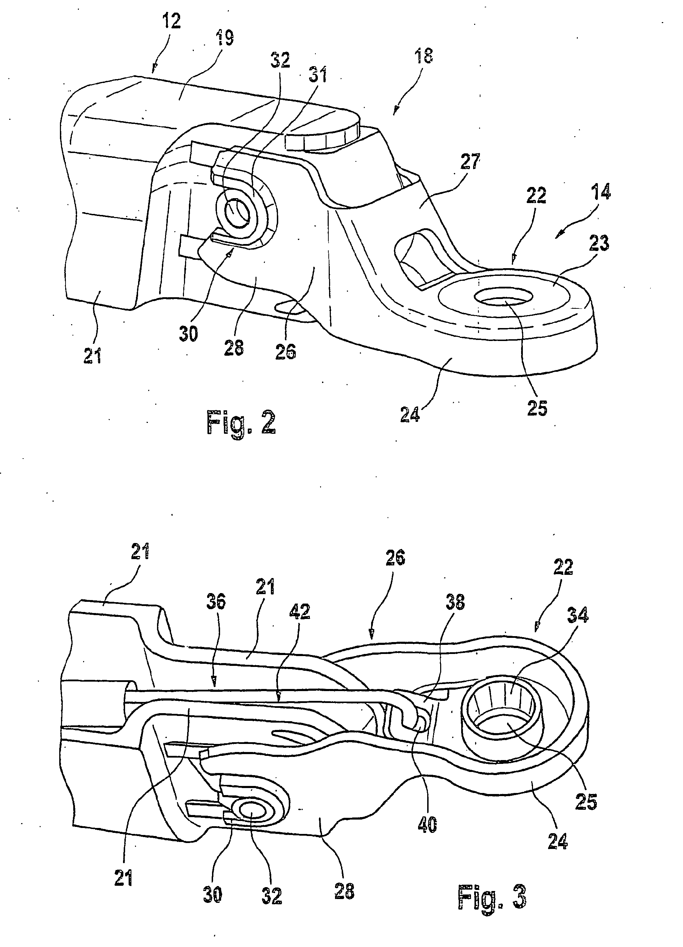

In Fig. 2 ist das zweite Ende 18 des Gelenkteils 12 mit dem Befestigungsteil 14 detailliert dargestellt. Das Gelenkteil 12 ist zumindest im Bereich seines zweiten Endes 18 von im Wesentlichen umgekehrt U-förmiger Gestalt bestehend aus einer Basis 19 und zwei Seitenwangen 21. In diesem Bereich ist das Gelenkteil 12 auch etwas verjüngt, d. h. die Basis 19 der U-Form des Gelenkteils 12 ist im Bereich des zweiten Endes 18 etwas geringer und die Seitenwangen 21 etwas nach innen versetzt (Fig. 3).

Das Befestigungsteil 14 ist als Stanz-Biege-Blechteil ausgebildet. Es weist ein Auge 22 auf, welches aus einer Deckfläche 23 mit einer Konusöffnung 25 gebildet ist und seitlich von einem nach unten gerichteten Kragen 24, bis auf einen etwa 100 Grad breiten Abschnitt begrenzt wird. Inmitten der Deckfläche 23 befindet sich die Konusöffnung 25. Der Kragen 24 setzt sich senkrecht zur Ebene der Konusöffnung 25 über das Auge 22 hinaus fort und bildet eine klammerartige Aufnahme 26, in die sich das verjüngte, zweite Ende 18 des Gelenkteils 12 schmiegt. Die Aufnahme 26 besteht dabei im Wesentlichen aus zwei, aus der Fortführung des Kragens 24 gebildete Flanken 28, an deren Ende jeweils U-förmige, in Richtung des Gelenkteils 12 weisende Öffnungen 30, angeordnet sind, in die Scharnierbolzen 32 des Gelenkteils 12 eingreifen. Zur Verstärkung ist der Rand der Öffnung 30 mit einem Verstärkungskranz 31 umgeben.

Zur Verstärkung der Flanken 28 erstreckt sich die Deckfläche 23 des Auges 22 als Verstärkungselement 27 in Richtung der Öffnungen 30 des Gelenkteils 12 zwischen die Flanken 28 fort.

In Fig. 3 ist das Gelenkteil 12 mit seinem zweiten Ende 18 und das Befestigungsteil 14 in einer Ansicht von unten dargestellt. Das Loch des Auges 22 ist kragenartig von einem Konus 34 umgeben und bildet so das Konuselement 25, das in montiertem Zustand zur Befestigung des Befestigungsteils 14 an der Wischerwelle einer Scheibenwischvorrichtung vorgesehen ist. Außen ist das Auge 22 größtenteils vom Kragen 24 umgeben. Der Kragen 24 ist seitlich zu den Flanken 28 fortgeführt, wodurch sich die Aufnahme 26 bildet. In dieser Aufnahme 26 ist der verjüngte Bereich des zweiten Endes 18 des Gelenkteils 12 eingefügt. Die Scharnierbolzen 32 greifen dabei in die U-förmigen Öffnungen 30 ein. Die offene Seite dieser U-förmigen Öffnungen 30 weist dabei in Richtung des Gelenkteils 12. Natürlich ist es möglich, die offene Seite der Öffnung 30 etwas zu verengen, um die Scharnierbolzen 32 in der Öffnung 30 einschnappen zu lassen.

Die Scharnierbolzen 32 sind nur auf die Seitenwangen 21 aufgesetzt und durchgreifen den verjüngten Bereich des zweiten Endes 18 nicht.

Weiterhin ist aus dem Verstärkungselement 25 des Befestigungsteils 14 eine Lasche 38 herausgestanzt und gebogen, die ein Loch 40 zur Aufnahme eines Federelements 42 aufweist.

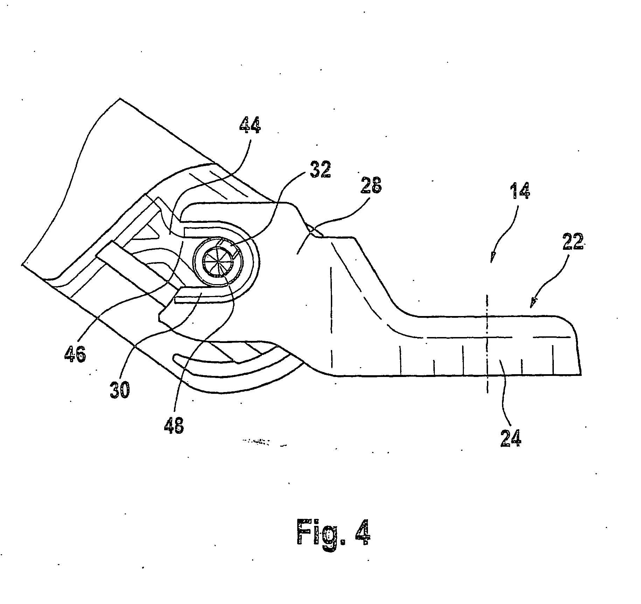

In Fig. 4 ist das zweite Ende 18 des Gelenkteils 12 mit dem Befestigungsteil 14 in einer Seitenansicht dargestellt. Der Scharnierbolzen 32 wird dabei auf der dem Befestigungsteil 14 abgewandten Seite, durch ein Abstützelement 44 abgestützt. Dieses Abstützelement 44 dient gleichzeitig als Drehwinkelbegrenzung, um den maximal möglichen Drehwinkel zwischen Befestigungsteil 14 und Gelenkteil 12 zu begrenzen. Dazu ist das Abstützelement 44 derart ausgebildet, dass es bei Erreichen des maximal erlaubten Drehwinkels zwischen Gelenkteil 12 und Gelenkteil 14 an der gelenkteilseitigen Ecke der Öffnung 30 anschlägt. Korrespondierend ist dies natürlich für beide Grenzpositionen möglich.

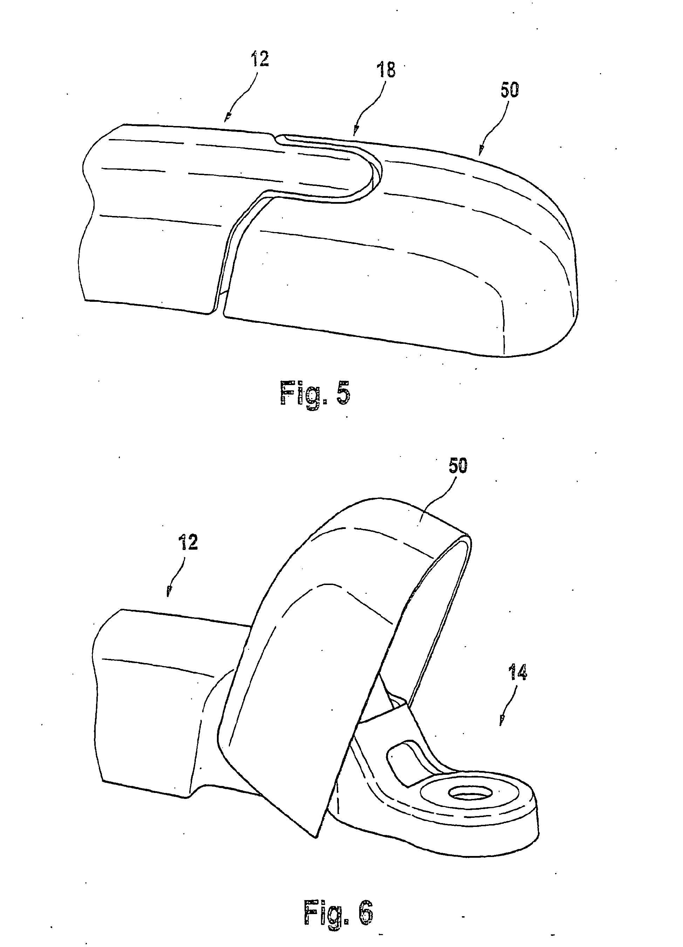

Der Scharnierbolzen 32 ist darüber hinaus so ausgebildet, dass er ein Befestigungselement 48 zur Befestigung einer Schutzkappe 50 (Fig. 5) aufweist. Dieses Befestigungselement 48 ist hier als kleine Bohrung ausgebildet, in die beispielsweise eine Noppe, die aus der Innenseite der Schutzkappe 50 herausgeformt ist, eingreifen kann. Auf diese Weise ist es möglich die Schutzkappe auch abklappbar zu gestalten.

In Fig. 5 ist das zweite Ende 18 des Gelenkteils 12 gezeigt, wobei das Befestigungsteil 14 von der Schutzkappe 50 abgedeckt ist.

In Fig. 6 ist die Schutzkappe 50 aus Fig. 5 in aufgeklappter Position dargestellt.

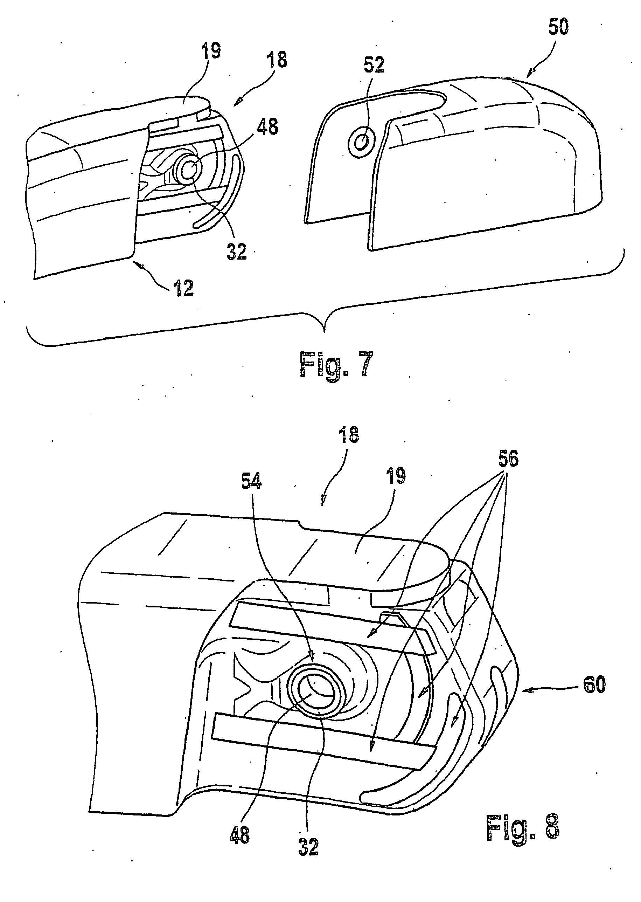

In Fig. 7 ist das zweite Ende 18 des Gelenkteils 12 sowie die Schutzkappe 50 detailliert dargestellt. Die Basis 19 des zweiten Endes 18 ist dabei so ausgebildet, dass sie sich über den Scharnierbolzen 32 hinaus erstreckt und in einer Ebene mit der Schutzkappe 50 befindet.

In Fig. 8 ist das zweite Ende 18 nochmals detailliert dargestellt. Der Scharnierbolzen 32 weist das Befestigungselement 48 auf sowie ein Rastelement 54, das als Kerbe ausgebildet ist. Dies dient dazu, die Schutzkappe 50 in der vorgesehenen Betriebsposition einrasten zu lassen und ein versehentliches Abklappen der Schutzkappe 50 zu verhindern. Zur Verbesserung der Gleiteigenschaften zwischen dem Gelenkteil 12 und dem Befestigungsteil 14 sind konzentrisch zum Scharnierbolzen 32 auf den Seitenwangen 21 des zweiten Endes 18 des Gelenkteils 12 Führungsbahnen 56 in Form von Erhebungen angeordnet, die ein leichtes Verdrehen des Gelenkteils 12 gegenüber dem Befestigungsteil 14 auch nach Phasen längerer Nichtbewegung ermöglichen, da die Auflagefläche durch die Führungsbahnen 56 verringert ist.

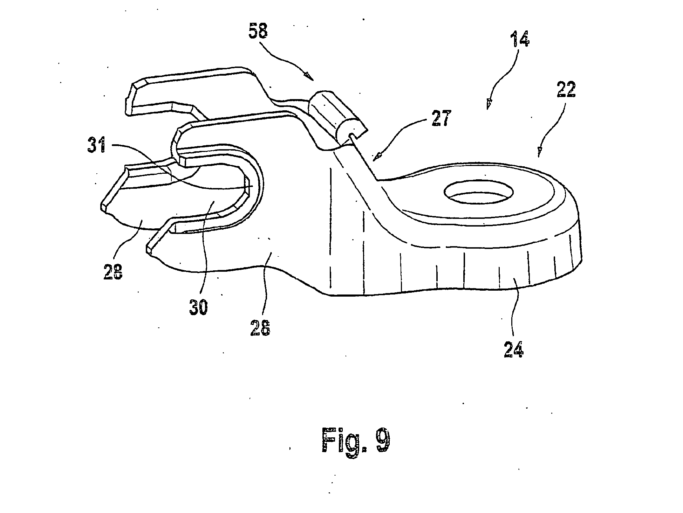

In Fig. 9 ist ein Befestigungsteil 14 in einer Variation dargestellt. In dieser Variation ist das Verstärkungselement 27 auf der gelenkteilseitigen Kante mit einer 180°-Biegung 58 versehen. Dies ermöglicht eine leichtere Montage des Befestigungsteils 14 an das Gelenkteil 12. Bei der Montage werden die Scharnierbolzen 32 in die Öffnungen 30 eingeführt, das Federelement 42 zwischen Gelenkteil 12 und Befestigungsteil 14 verhakt und anschließend das Befestigungsteil 14 in eine gestreckte Position zum Gelenkteil 12 bewegt. Dabei gleitet das Befestigungsteil 14 mit der Biegung 58 über eine Hinterfläche 60 (Fig. 8) des Gelenkteils 12.

## Patentansprüche

1. Wischerarm (10), insbesondere für eine Scheibenwischvorrichtung eines Kraftfahrzeugs, mit einem aus Kunststoff ausgebildeten Gelenkteil (12), das zwei Enden aufweist und an seinem ersten Ende (16) mit einem Wischblatt verbindbar ist und weiterhin an seinem, dem ersten Ende abgewandten zweiten Ende (18) mit einem Befestigungsteil (14) drehbeweglich verbunden ist, **dadurch gekennzeichnet, dass** das Befestigungsteil (14) aus Blech ausgebildet ist und eine Aufnahme (26) mit zwei Flanken (29) aufweist, an deren Ende jeweils U-förmige, in Richtung des Gelenkteils (12) weisende Öffnungen (30) angeordnet sind, in die Scharnierbolzen (32) des Gelenkteils (12) eingreifen.

2. Wischerarm (10) nach Anspruch 1, **dadurch gekennzeichnet, dass** Gelenkteil (12) und Befestigungsteil (14) über mindestens ein im Wesentlichen gerades Federelement (42) verspannt sind.

3. Wischerarm (10) nach einem der vorhergehenden Ansprüche, **dadurch gekennzeichnet, dass** das Gelenkteil (12) zumindest im Bereich des zweiten Endes (18) von im wesentlichen umgekehrt U-förmiger Gestalt ist und das Befestigungsteil (14) das Gelenkteil (12) in diesem Bereich zumindest teilweise umgreift.

4. Wischerarm (10) nach einem der vorhergehenden Ansprüche, **dadurch gekennzeichnet, dass** das Gelenkteil (12) im Bereich des zweiten Endes (18) verjüngt ist und im verjüngten Bereich mindestens ein Scharnierbolzen (32) angeordnet, insbesondere angeformt ist.

5. Wischerarm (10) nach Anspruch 4, **dadurch gekennzeichnet, dass** der verjüngte Bereich, insbesondere der Scharnierbolzen (32) mindestens ein Befestigungselement (48) zur Befestigung einer Schutzkappe (50) aufweist.

6. Wischerarm (10) nach einem der Ansprüche 4 bis 5, **dadurch gekennzeichnet, dass** der Scharnierbolzen (32) in Richtung des ersten Endes (16) durch mindestens ein Abstützelement (44) abgestützt ist.

7. Wischerarm (10) nach Anspruch 6, **dadurch gekennzeichnet, dass** die Abstützelemente (44) als Anschläge zur Drehwinkelbegrenzung dienen.

8. Wischerarm (10) nach einem der Ansprüche 4 bis 7, **dadurch gekennzeichnet, dass** der Scharnierbolzen (32) das Gelenkteil (12) nicht durchgreift.

## Claims

1. Wiper arm (10), especially for a windscreen-wiping device of a motor vehicle, with an articulated part (12) which is formed from plastic, has two ends and can be connected at its first end (16) to a wiper blade, and, furthermore, at its second end (18) facing away from the first end, is connected rotatably to a fastening part (14), **characterized in that** the fastening part (14) is formed from sheet metal and has a mount (26) with two flanks (29), at the ends of which are respectively arranged U-shaped openings (30) which point in the direction of the articulated part (12) and in which hinge pins (32) of the articulated part (12) engage.

2. Wiper arm (10) according to Claim 1, **characterized in that** the articulated part (12) and fastening part (14) are braced via at least one essentially rectilinear spring element (42).

3. Wiper arm (10) according to one of the preceding claims, **characterized in that** the articulated part (12) is of essentially inverted U-shaped design at least in the region of the second end (18) and the fastening part (14) at least partially engages around the articulated part (12) in this region.

4. Wiper arm (10) according to one of the preceding claims, **characterized in that** the articulated part (12) is tapered in the region of the second end (18) and at least one hinge pin (32) is arranged, in particular is integrally formed, in the tapered region.

5. Wiper arm (10) according to Claim 4, **characterized in that** the tapered region, in particular the hinge pin (32), has at least one fastening element (48) for the fastening of a protective cap (50).

6. Wiper arm (10) according to either of Claims 4 and 5, **characterized in that** the hinge pin (32) is supported in the direction of the first end (16) by at least one supporting element (44).

7. Wiper arm (10) according to Claim 6, **characterized in that** the supporting elements (44) serve as stops for limiting the angle of rotation.

8. Wiper arm (10) according to one of Claims 4 to 7, **characterized in that** the hinge pin (32) does not reach through the articulated part (12).

## Revendications

1. Bras d'essuie-glace (10), notamment pour un dispositif d'essuie-glace d'un véhicule automobile, comportant une pièce d'articulation (12) en matière plastique ayant deux extrémités, sa première extrémité (16) étant reliée à un balai d'essuie-glace et en outre, sa seconde extrémité (18) à l'opposé de la première extrémité être reliée de manière mobile en rotation à une pièce de fixation (14),
**caractérisé en ce que**
la pièce de fixation (14) est en tôle et comporte un logement (26) à deux flancs (29) dont chaque extrémité a un orifice (30) en forme de U tourné vers la pièce d'articulation (12) et dans lesquels pénètrent les axes de charnière (32) de la pièce d'articulation (12).

2. Bras d'essuie-glace (10) selon la revendication 1,
**caractérisé en ce que**
la pièce d'articulation (12) et la pièce de fixation (14) sont serrées par au moins un élément à ressort (42) essentiellement droit.

3. Bras d'essuie-glace (10) selon l'une des revendications précédentes,
**caractérisé en ce que**
au moins au niveau de la seconde extrémité (18), la pièce d'articulation (12) a, une forme de U principalement inversé et la pièce de fixation (14) entoure la pièce d'articulation (12) au moins en partie dans cette zone.

4. Bras d'essuie-glace (10) selon l'une des revendications précédentes,
**caractérisé en ce que**
la pièce d'articulation (12) est diminuée au niveau de la seconde extrémité (18) et dans cette zone diminuée, il y a au moins un goujon d'articulation (32), notamment un goujon obtenu par mise en forme.

5. Bras d'essuie-glace (10) selon la revendication 4,
**caractérisé en ce que**
la zone diminuée, notamment le goujon d'articulation (32), comporte au moins un élément de fixation (48) pour fixer un capuchon protecteur (50).

6. Bras d'essuie-glace (10) selon l'une des revendications 4 et 5,
**caractérisé en ce que**
le goujon d'articulation (32) est appuyé en direction de la première extrémité (16) par au moins un élément d'appui (44).

7. Bras d'essuie-glace (10) selon la revendication 6,
**caractérisé en ce que**
les éléments d'appui (44) servent de butée pour limiter le mouvement angulaire de rotation.

8. Bras d'essuie-glace (10) selon l'une des revendications 4 à 7,
**caractérisé en ce que**
le goujon d'articulation (32) ne traverse pas la pièce d'articulation (12).
